# EUROPÄISCHE PATENTSCHRIFT

(11) **EP 3 736 360 B1**
(45) Veröffentlichungstag und Bekanntmachung des Hinweises auf die Patenterteilung: **08.12.2021**
(21) Anmeldenummer: 20172032.3
(22) Anmeldetag: 29.04.2020
(51) Int. Cl.: D01H 13/00, B65H 54/26, D01H 15/013

(54) **VERFAHREN ZUR STEUERUNG EINES SERVICEAGGREGATS UND SERVICEAGGREGAT**
METHOD FOR CONTROLLING A SERVICE UNIT AND SERVICE UNIT
PROCÉDÉ DE COMMANDE D'UN GROUPE DE SERVICE ET UN GROUPE DE SERVICE

(30) Priorität: 07.05.2019 DE 102019111775
(43) Veröffentlichungstag der Anmeldung: 11.11.2020
(73) Patentinhaber: Saurer Spinning Solutions GmbH & Co. KG, 52531 Übach-Palenberg (DE)
(72) Erfinder: Sprecher, Jonathan, 52066 Aachen (DE); Schiffers, Dirk, 41352 Korschenbroich (DE)
(74) Vertreter: Morgenthum-Neurode, Mirko

(56) Entgegenhaltungen:
- EP-A1- 1 847 497
- EP-A1- 3 312 122
- DE-A1- 2 350 840
- DE-A1- 10 137 056
- DE-A1- 10 137 081
- JP-A- S61 152 834

## Beschreibung

Die Erfindung betrifft ein Verfahren zur Steuerung eines verschiedene Servicetätigkeiten an einer Arbeitsstelle ausführenden Serviceaggregats an einer mehrere Arbeitsstellen aufweisenden Textilmaschine, wie beispielsweise einer Spinn- oder Spulmaschine, wobei die durch das Serviceaggregat durchzuführenden Servicetätigkeiten und Bewegungsaufträge durch eine Steuerungseinheit priorisiert werden. Die Erfindung betrifft ferner ein Serviceaggregat mit einer Steuerungseinrichtung für die Durchführung von Bewegungsaufträgen und Serviceaufträgen an den Arbeitsstellen einer Textilmaschine, wie beispielsweise einer Spinn- oder Spulmaschine.

Bekannte Serviceaggregate der eingangsgenannten Art werden bei modernen Textilmaschinen, insbesondere bei Spinnmaschinen, welche eine Vielzahl von Spinnstellen aufweisen, dazu genutzt, um unterschiedliche, während des Betriebes der Spinnmaschine anfallenden Servicetätigkeiten automatisiert durchzuführen. Durch den Einsatz der Serviceaggregate können die Spinnmaschinen mit einem nur sehr geringen Personaleinsatz besonders effizient betrieben werden. Zu den von den Serviceaggregaten automatisiert durchzuführenden Servicetätigkeiten zählt bspw. das Einlegen einer Leerhülse an den Spinnstellen der Spinnmaschine, das Anlegen eines Fadens an einer Leerhülse sowie die Durchführung von Entstaubungsfahrten zur Reinigung der einzelnen Spinnstellen. Die Anzahl der eingesetzten Serviceaggregate hängt von der Anzahl der Spinnstellen der Spinnmaschine ab. Bei der Verwendung mehrerer Serviceaggregate an einer Spinnmaschine, ist es erforderlich, deren Bewegung zueinander zu koordinieren, um Konflikten der Serviceaggregate während des Betriebs vorzubeugen. Hierzu können Bewegungsaufträge wie Ausweichfahrten oder Parkaufträge vorgesehen werden, die einen reibungslosen Betrieb gewährleisten.

Die unterschiedlichen Service- und Bewegungsaufträge der Serviceaggregate werden dabei durch eine Steuerungseinheit priorisiert, die eine Rangfolge der durchzuführenden Servicetätigkeiten sowie Bewegungsaufträge festlegt. Bei den in der Rangfolge festzulegenden Service- und Bewegungsaufträgen handelt es sich sowohl um automatisiert durch die Spinnstellen generierte Aufträge, als auch um manuell ausgelöste, bspw. durch einen Servicemitarbeiter erteilte Aufträge, wobei die Festlegung der Reihenfolge durch die Steuerungseinheit erfolgt.

Die Möglichkeit zur manuellen Erstellung von Bewegungs- und Serviceaufträgen erlaubt es einem Servicemitarbeiter Einstellarbeiten an den Serviceaggregaten vorzunehmen, um so an den einzelnen Spinnstellen zu gewährleisten, dass die auszuführenden Servicetätigkeiten störungsfrei durchgeführt werden. So erfolgt bspw. zur Gewährleistung einer störungsfreien Durchführung des Serviceauftrags zum Einlegen einer Leerhülse eine Ausrichtung der Fangtasche der Leerhülse gegenüber dem Spulenrahmen der Spinnstelle, die ein reibungsloses Einlegen der Leerhülse in dem Spulenrahmen ermöglicht. Entsprechende Einstellungen an den Serviceaggregaten haben für jede Spinnstelle einzeln zu erfolgen, da aufgrund von Bauteil- und Fertigungstoleranzen Abweichungen bei den Einstellungen für die einzelnen Spinnstellen bestehen. Ein betriebsgemäßer Verschleiß der Bauteile führt ferner dazu, dass auch im Betrieb der Spinnmaschine Anpassungen vorgenommen werden müssen, um weiterhin einen störungsfreien Betrieb gewährleisten zu können.

Insbesondere nach der Neumontage einer Spinnmaschine besteht ein erhöhter Einstellungsbedarf durch die einrichtenden Servicemitarbeiter, welcher mit zunehmender Betriebsdauer der Spinnmaschine abnimmt. Auch während des Betriebs kann es zu Betriebsstörungen kommen, welche dann durch eine Anpassung und Einstellung der Serviceaggregate durch die Servicemitarbeiter behoben werden müssen.

DE 101 37 081 A1 , DE 101 37 056 A1, EP 1 847 497 A1, EP 3 312 122 A1, JP S61 152834 A, DE 23 50 840 A1 offenbaren Verfahren zum Ansteuern von Serviceaggregate und gesteuerten Serviceaggregate, bei denen die Bedienungstätigkeiten gemäß bestimmten Abläufe priorisiert werden.

Grundsätzlich ist es zur Durchführung der Einstellarbeiten durch die Servicemitarbeiter erforderlich, dass dieser die einzustellende Servicetätigkeit an dem Serviceaggregat ausführen lässt. Im Falle einer eine Störung hervorrufenden Servicetätigkeit muss der Servicemitarbeiter diese Servicetätigkeit an der jeweiligen Spinnstelle beobachten, auswerten und anschließend geeignete Einstellungen vornehmen können. Hierzu hat der Servicemitarbeiter die Möglichkeit, entsprechende Serviceaufträge manuell zu erstellen, um diese an den entsprechenden Spinnstellen durchführen zu lassen. Bekannte Spinnmaschinen weisen jedoch den Nachteil auf, dass es zu erheblichen Wartezeiten für den Servicemitarbeiter kommt, bis die angeforderte Tätigkeit an der jeweiligen Spinnstelle durchgeführt wird, nachdem zuvor automatisiert generierte Serviceaufträge und/oder Bewegungsaufträge abgearbeitet werden.

Der Erfindung liegt daher die Aufgabe zugrunde, ein Verfahren zur Steuerung eines verschiedene Servicetätigkeiten sowie Bewegungsaufträge ausführenden Serviceaggregats sowie ein Serviceaggregat mit einer Steuerungseinrichtung für die Durchführung von Bewegungsaufträgen und Serviceaufträgen bereitzustellen, welche eine schnelle Durchführung von Einstell- und Wartungsarbeiten an dem Serviceaggregat ermöglichen.

Die Erfindung löst die Aufgabe durch ein Verfahren mit den Merkmalen des Anspruchs 1 sowie ein Serviceaggregat mit den Merkmalen des Anspruchs 6. Vorteilhafte Weiterbildungen der Erfindung sind in den abhängigen Ansprüchen angegeben.

Kennzeichnend für das erfindungsgemäße Verfahren zur Steuerung eines verschiedene Servicetätigkeiten an einer Arbeitsstelle der Textilmaschine, insbesondere an einer Spinn- oder Spulstelle ausführenden Serviceaggregats ist, dass Ausweichfahrten und Parkaufträge mit höchster Priorität und manuell eingestellte Servicetätigkeiten und Bewegungsaufträge mit hoher Priorität durchgeführt werden.

Nach dem erfindungsgemäßen Verfahren legt die Steuerungseinrichtung die Abarbeitungsreihenfolge der anstehenden Service- und Bewegungsaufträge fest. Ausweichfahrten und Parkaufträgen werden dabei die höchste Priorität zugeordnet, sodass auch bei Einstellarbeiten durch einen Servicemitarbeiter im laufenden Betrieb der Textilmaschine weiterhin ein reibungsloser Betrieb gewährleistet ist, nachdem Ausweichfahrten und Parkaufträge, die einem Konflikt mit benachbarten Serviceaggregaten vorbeugen, mit höchster Priorität durchgeführt werden. Gemäß dem erfindungsgemäßen Verfahren ist ferner vorgesehen, dass alle manuell eingestellten Servicetätigkeiten und Bewegungsaufträge mit hoher Priorität durchgeführt werden. Hierdurch wird erreicht, dass die im Rahmen von Einstell-, Wartungs- oder Einrichtungsarbeiten durch Servicemitarbeiter angeforderten Tätigkeiten oder Bewegungsaufträge der Serviceaggregate kurzfristig durchgeführt werden, was es dem Servicemitarbeiter erlaubt, die von ihm vorzunehmenden Tätigkeiten, insbesondere Einstellarbeiten bzw. Anpassungsarbeiten effizient durchzuführen. Die erfindungsgemäße Ausgestaltung verhindert somit lange Wartezeiten für den Servicemitarbeiter, wobei insbesondere bei einem Partiewechsel ein erheblicher Zeitgewinn für den Servicemitarbeiter erreicht wird, nachdem dieser unmittelbar prüfen kann, ob das Serviceaggregat an der jeweiligen Arbeitsstelle in der vorgegebenen Weise arbeitet.

Gegenüber der bekannten, aus dem Stand der Technik erfolgenden Festlegung der Reihenfolge von Bewegungsaufträgen und Servicetätigkeiten, die dazu führt, dass Servicemitarbeiter erst nach Abarbeitung aller vorherigen Aufträge mit den durchzuführenden Arbeiten beginnen können, wird somit die Produktivität des Mitarbeiters in erheblichem Maße gesteigert, wobei gleichzeitig die Zuverlässigkeit der Textilmaschine wie insbesondere einer Spinn- oder Spulmaschine gewährleistet ist. Durch die durch die erfindungsgemäße Ausgestaltung reduzierten Wartezeiten können Wartungsarbeiten durch den Servicemitarbeiter kostengünstiger, effizienter und schneller durchgeführt werden.

Erfindungsgemäß resultiert dies aus der durch die Steuerungseinheit vorgenommenen Priorisierung sämtlicher anstehender Servicetätigkeiten und Bewegungsaufträge, wobei insbesondere die manuell erstellten Aufträge aufgrund ihrer hohen Priorität bevorzugt durchgeführt werden. Bei der Steuerungseinheit kann es sich um eine externe (zentrale) Steuerungseinheit, welche extern des Serviceaggregats angeordnet und zur Steuerung eines oder mehrerer zugeordneter Serviceaggregate eingerichtet ist, oder eine interne Steuerungseinheit handeln, welche unmittelbar an dem Serviceaggregat angeordnet und zur Steuerung dieses ausgestaltet ist.

Grundsätzlich können alle manuell erstellten Serviceaufträge des Serviceaggregats mit hoher Priorität versehen werden. Nach einer besonders vorteilhaften Ausgestaltung der Erfindung ist jedoch vorgesehen, dass insbesondere der Serviceauftrag zum Einlegen einer Leerhülse und/oder der Serviceauftrag zum Anlegen eines Fadens an der Leerhülse mit hoher Priorität durchgeführt werden. Diese Ausgestaltung gewährleistet, dass diese Hauptservicetätigkeiten der Serviceaggregate im Falle einer manuellen Anforderung besonders bevorzugt durchgeführt werden. Ein zuverlässiger Betrieb der Textilmaschine wird dabei in besonderem Maße gewährleistet, nachdem diese beiden Servicetätigkeiten für den Betrieb der Textilmaschine von vordringlicher Bedeutung sind. Eine gemäß dieser Weiterbildung der Erfindung vorgenommene Priorisierung der durch den Servicemitarbeiter erteilten Serviceaufträge gewährleistet, dass dieser unmittelbar mit der Prüfung und ggf. Einstellung der für einen effizienten und reibungslosen Betrieb der Textilmaschine wesentlichen Servicetätigkeiten beginnen kann und diese zeitnah abgeschlossen werden können.

Um in besonders vorteilhafter Weise zu gewährleisten, dass die von den Servicemitarbeitern angeforderten Servicetätigkeiten und Bewegungsaufträge zeitnah durchgeführt werden, ist ferner gemäß einer Weiterbildung der Erfindung vorgesehen, dass der Serviceauftrag zur Durchführung einer Entstaubungsfahrt mit einer mittleren Priorität durchgeführt wird. Gegenüber den mit hoher Priorität durchgeführten, durch den Mitarbeiter manuell erteilten Servicetätigkeiten und Bewegungsaufträgen wird eine angeforderte Entstaubungsfahrt wegen der geringeren, nämlich mittleren Priorität, nachrangig behandelt, sodass die vom Servicemitarbeiter durchzuführenden Arbeiten und Kontrollen besonders zeitnah und effektiv vor der Durchführung der Entstaubungsfahrt durchgeführt werden können.

Um die Effektivität des Servicemitarbeiters in besonderer Weise zu gewährleisten, ist ferner nach einer weiteren vorteilhaften Ausgestaltung der Erfindung vorgesehen, dass von den Arbeitsstellen automatisiert generierte Serviceaufträge wie das Einlegen einer Leerhülse oder das Anlegen eines Fadens an der Leerhülse mit normaler Priorität durchgeführt werden, was in ergänzender Weise die Effizienz der Tätigkeiten des Servicemitarbeiters im Rahmen der von ihm durchzuführenden Einstell- und Kontrolltätigkeiten steigert, da erst nach einem Abschluss der manuellen Aufträge die automatisiert generierten Aufträge durchgeführt werden.

Kennzeichnend für das erfindungsgemäße Serviceaggregat mit einer Steuerungseinrichtung für die Durchführung von Bewegungsaufträgen und Serviceaufträgen an den Arbeitsstellen wie insbesondere an den Spinn- oder Spulstellen der Textilmaschine ist, dass die Steuerungseinrichtung die durch das Serviceaggregat durchzuführenden Servicetätigkeiten und Bewegungsaufträge derart priorisiert, dass Ausweichfahrten und Parkaufträge mit höchster Priorität und manuell eingestellte Servicetätigkeiten und Bewegungsaufträge mit hoher Priorität durchgeführt werden. Die manuell einstellbaren Servicetätigkeiten können generell vorzugsweise unmittelbar an der Spinnstelle oder an einer extern der Spinnstelle angeordneten Einheit, über welche Servicetätigkeiten für mehr als eine Spinnstelle einstellbar sind, eingegeben werden. Die unmittelbare Eingabe an der Spinnstelle ist bevorzugt, da die manuelle Eingabe an der Spinnstelle eine ansonsten erforderliche zusätzliche Eingabe oder Zuordnung der manuell einstellbaren Servicetätigkeit zu einer entsprechenden Spinnstelle überflüssig macht und dadurch eine potentielle Fehlerquelle wie bspw. die Eingabe einer falschen Spinnstellennummer ausschließt.

Das erfindungsgemäße Serviceaggregat steht in Verbindung mit einer dieses steuernden Steuerungseinrichtung, welche die Abarbeitung der durch das Serviceaggregat durchzuführenden Arbeiten regelt. Bei der Steuerungseinrichtung kann es sich um eine externe (zentrale) Steuerungseinrichtung, welche extern des Serviceaggregats angeordnet und zur Steuerung eines oder mehrerer zugeordneter Serviceaggregate eingerichtet ist, oder eine interne Steuerungseinrichtung handeln, welche unmittelbar an dem Serviceaggregat angeordnet und zur Steuerung dieses ausgestaltet ist. Erfindungsgemäß ist dabei vorgesehen, dass die Steuerungseinrichtung die Ausweichfahrten und Parkaufträge, welche Konflikte mit weiteren Serviceaggregaten verhindern, mit höchster Priorität durchführt, sodass ein reibungsloser Betrieb der Textilmaschine und der Serviceaggregate gewährleistet ist. Manuell durch bspw. einen Servicemitarbeiter angeforderte Servicetätigkeiten und Bewegungsaufträge werden hieran anschließend nachrangig mit hoher Priorität durchgeführt, sodass gewährleistet ist, dass durch den Servicemitarbeiter an dem Serviceaggregat vorzunehmende Kontroll- sowie Einstellarbeiten ohne lange Wartezeiten durchgeführt werden können, bspw. auch dann, wenn von den Arbeitsstellen automatisiert generierte Serviceaufträge vorliegen.

Das erfindungsgemäße Serviceaggregat ermöglicht es somit, dem Servicemitarbeiter im Bedarfsfall ohne Zeitverlust das Serviceaggregat an der von ihm ausgewählten oder vorgegebenen Arbeitsstelle zu kontrollieren, anzupassen und zu justieren.

Besonders vorteilhafterweise ist dabei vorgesehen, dass die Steuerungseinrichtung den manuellen Serviceauftrag zum Einlegen einer Leerhülse und/oder zum Anlegen eines Fadens an der Leerhülse derart priorisiert, dass diese mit hoher Priorität durchgeführt werden. Eine Priorisierung insbesondere dieser Servicetätigkeit gewährleistet eine kurzfristige Kontrolle und ggf. Einstellung dieser Servicetätigkeiten an der jeweiligen Arbeitsstelle. Bei den Serviceaufträgen, Einlegen einer Leerhülse und Anlegen des Fadens, handelt es sich dabei um grundlegende Serviceaufträge, die für eine hohe Effizienz der Textilmaschine mit hohem Automatisierungsgrad von besonderer Bedeutung sind.

Weiter vorteilhaft ist nach einer Weiterbildung der Erfindung vorgesehen, dass die Steuerungseinrichtung den Serviceauftrag zur Durchführung einer Entstaubungsfahrt derart priorisiert, dass dieser mit mittlerer Priorität durchgeführt wird. Die gegenüber der hohen Priorität nachrangige mittlere Priorität gewährleistet in jedem Fall, dass manuell Überprüfungen oder Anpassungen vor der Durchführung einer Entstaubungsfahrt durchgeführt werden, welche nach Abarbeitung sämtlicher Aufträge mit höchster und hoher Priorität durchgeführt wird. Die Entstaubungsfahrt ist dabei ebenfalls für den Betrieb der Textilmaschine erforderlich, um Störungen der einzelnen Arbeitsstellen vorzubeugen.

Nach einer weiteren Ausgestaltung der Erfindung ist vorgesehen, dass die von den Arbeitsstellen automatisiert generierten Serviceaufträge derart priorisiert sind, dass diese mit normaler Priorität durchgeführt werden. Eine Abarbeitung der automatisiert generierten Serviceaufträge erfolgt somit erst nach Durchführung der Aufträge mit höchster, hoher und mittlerer Priorität, sodass in jedem Fall gewährleistet ist, dass Tätigkeiten durch den Servicemitarbeiter an ggf. Probleme aufweisenden Arbeitsstellen sofort bzw. mit einer nur geringen zeitlichen Verzögerung durchgeführt werden können.

Ein Ausführungsbeispiel der Erfindung wird nachstehend mit Bezug auf die Zeichnung erläutert. In der Zeichnung zeigt:

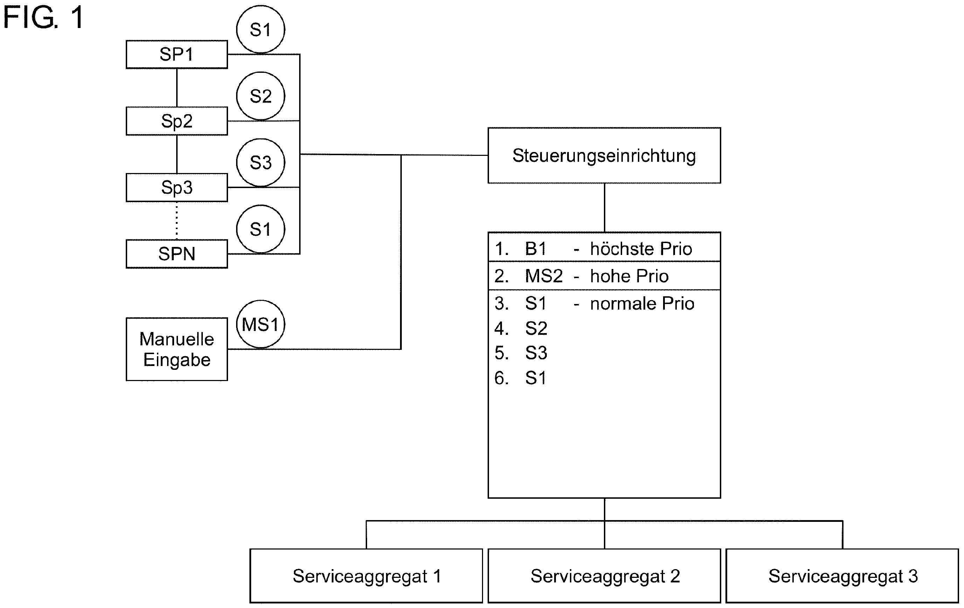

Fig. 1 in einer schematischen Darstellung ein Ablaufplan der Festlegung der Reihenfolge der für ein Serviceaggregat vorgesehenen Servicetätigkeiten und Bewegungsaufträge.

Der in Fig. 1 dargestellte Ablaufplan zeigt schematisch die Abarbeitung der der Steuerungseinrichtung zugeleiteten Bewegungs- und Serviceaufträge, welche an das oder die zugeordneten Serviceaggregate weitergeleitet werden. Bei der Steuerungseinrichtung kann es sich um eine externe Steuereinrichtung, welche extern des Serviceaggregats angeordnet und zur Steuerung eines oder mehrerer zugeordneter Serviceaggregate eingerichtet ist, oder eine interne Steuereinrichtung handeln, welche unmittelbar an dem Serviceaggregat angeordnet und zur Steuerung dieses ausgestaltet ist.

Im vorliegenden Ausführungsbeispiel werden sämtliche von den einzelnen Arbeitsstellen, wie insbesondere von Spinn- oder Spulstellen SP1, SP2, SP3, SPN automatisiert generierten Serviceaufträge S1, S2, S3 an die Steuerungseinrichtung übermittelt. Darüber hinaus besteht für einen Servicemitarbeiter die Möglichkeit, über eine manuelle Eingabe eine Servicetätigkeit MS1 anzufordern. Innerhalb der Steuerungseinrichtung werden die der Steuerungseinrichtung zugeleiteten Serviceaufträge sowie möglicherweise aufgrund der Serviceaufträge generierte Bewegungsaufträge entsprechend der in der Steuerungseinrichtung hinterlegten Priorisierungsregeln zu einer Abarbeitungsreihenfolge zusammengefasst.

Im dargestellten Beispiel besitzt ein vorliegender Bewegungsauftrag zur Durchführung einer Ausweichfahrt B1 die höchste Priorität und steht in der Abarbeitungsrangfolge an erster Stelle. Ein durch einen Servicemitarbeiter eingestellter Serviceauftrag MS1 zum Einlegen einer Leerhülse erfolgt nach dem Bewegungsauftrag B1, da der Serviceauftrag MS1 der hohen Kategorie in der Abarbeitungsfolge zugeordnet ist. Die automatisiert von den Arbeitsstellen generierten Serviceaufträge S1, S2 und S3 erfolgen mit nachfolgender Priorität und werden durch die Steuerungseinrichtung an die entsprechend zugeordneten Serviceaggregate 1 bis 3 weitergeleitet.

Durch die Priorisierung der manuellen Servicetätigkeit MS1 vor den automatisiert generierten Serviceaufträgen S1 bis S3 wird gewährleistet, dass der durch den Servicemitarbeiter angeforderte Serviceauftrag ohne Wartezeiten ausgeführt wird, sodass der Servicemitarbeiter die Servicetätigkeit MS1 überprüfen und ggf. Einstellarbeiten an dem Serviceaggregat vornehmen kann.

## Patentansprüche

1. Verfahren zur Steuerung eines verschiedene Servicetätigkeiten an einer Arbeitsstelle ausführenden Serviceaggregats an einer mehrere Arbeitsstellen aufweisenden Textilmaschine, wobei die durch das Serviceaggregat durchzuführenden Servicetätigkeiten (S1, S2, S3) und Bewegungsaufträge (B1) durch eine Steuerungseinheit priorisiert werden,
**dadurch gekennzeichnet, dass**
Ausweichfahrten (B1) und Parkaufträge mit höchster Priorität und manuell eingestellte Servicetätigkeiten (MS1, MS2) und Bewegungsaufträge mit hoher Priorität durchgeführt werden.

2. Verfahren nach Anspruch 1, **dadurch gekennzeichnet, dass** der Serviceauftrag zum Einlegen einer Leerhülse (MS1) mit hoher Priorität durchgeführt wird.

3. Verfahren nach Anspruch 1 oder 2, **dadurch gekennzeichnet, dass** der Serviceauftrag zum Anlegen eines Fadens an der Leerhülse (MS2) mit hoher Priorität durchgeführt wird.

4. Verfahren nach einem oder mehreren der vorhergehenden Ansprüche, **dadurch gekennzeichnet, dass** der Serviceauftrag zur Durchführung einer Entstaubungsfahrt (S3) mit mittlerer Priorität durchgeführt wird.

5. Verfahren nach einem oder mehreren der vorhergehenden Ansprüche, **dadurch gekennzeichnet, dass** von den Arbeitsstellen automatisiert generierte Serviceaufträge (S1, S2) mit normaler Priorität durchgeführt werden.

6. Serviceaggregat mit einer Steuerungseinrichtung für die Durchführung von Bewegungsaufträgen und Serviceaufträgen an den Arbeitsstellen einer Textilmaschine,
**dadurch gekennzeichnet, dass**
die Steuerungseinrichtung die durch das Serviceaggregat durchzuführenden Servicetätigkeiten (S1, S2, S3) und Bewegungsaufträge (B1) derart priorisiert, dass Ausweichfahrten (B1) und Parkaufträge mit höchster Priorität und manuell eingestellte Servicetätigkeiten (MS1, MS2) und Bewegungsaufträge mit hoher Priorität durchgeführt werden.

7. Serviceaggregat nach Anspruch 6, **dadurch gekennzeichnet, dass** die Steuerungseinrichtung den manuellen Serviceauftrag zum Einlegen einer Leerhülse (MS1) und/oder zum Anlegen eines Fadens an der Leerhülse (MS2) derart priorisiert, dass diese mit hoher Priorität durchgeführt werden.

8. Serviceaggregat nach Anspruch 6 oder 7, **dadurch gekennzeichnet, dass** die Steuerungseinrichtung den Serviceauftrag zur Durchführung einer Entstaubungsfahrt (S3) derart priorisiert, dass dieser mit mittlerer Priorität durchgeführt wird.

9. Serviceaggregat nach einem oder mehreren der vorhergehenden Ansprüche, **dadurch gekennzeichnet, dass** die Steuerungseinrichtung die von den Arbeitsstellen automatisiert generierten Serviceaufträge (S1, S2) derart priorisiert, dass diese mit normaler Priorität durchgeführt werden.

## Claims

1. A method for controlling a service unit performing various service activities at one workstation on a textile machine having several workstations, in which case the service activities (S1, S2, S3) and movement orders (B1) to be carried out by the service unit are prioritised by a controller unit,
**characterised in that**
avoidance manoeuvres (B1) and parking orders are carried out with the highest priority and manually set service activities (MS1, MS2) and movement orders are carried out with high priority.

2. The method according to claim 1, **characterised in that** the service order for inserting an empty sleeve (MS1) is carried out with high priority.

3. The method according to claim 1 or 2, **characterised in that** the service order for laying a thread on the empty tube (MS2) is carried out with high priority.

4. The method according to one or more of the preceding claims, **characterised in that** the service order for carrying out a dust removal run (S3) is carried out with medium priority.

5. The method according to one or more of the preceding claims, **characterised in that** service orders (S1, S2) generated automatically by the workstations are carried out with normal priority.

6. A service unit with a controller device for carrying out movement orders and service orders at the workstations of a textile machine,
**characterised in that**
the controller device prioritises the service activities (S1, S2, S3) and movement orders (B1) to be carried out by the service unit in such a way that avoidance manoeuvres (B1) and parking orders are carried out with the highest priority and manually set service activities (MS1, MS2) and movement orders are carried out with high priority.

7. The service unit according to claim 6, **characterised in that** the controller device prioritises the manual service order for inserting an empty tube (MS1) and/or for laying a thread on the empty tube (MS2) in such a way that these are carried out with high priority.

8. The service unit according to claim 6 or 7, **characterised in that** the controller device prioritises the service order for carrying out a dust removal run (S3) in such a way that it is carried out with medium priority.

9. The service unit according to one or more of the preceding claims, **characterised in that** the controller device prioritises the service orders (S1, S2) generated automatically by the workstations in such a way that they are carried out with normal priority.

## Revendications

1. Procédé de commande d'un groupe de service réalisant diverses opérations de service sur un poste de travail d'une machine textile comportant plusieurs postes de travail, par lequel la priorité est donnée aux opérations de service (S1, S2, S3) réalisées par le groupe de service et à la commande de mouvement (B1) par le biais d'une unité de commande,
**caractérisé en ce que**
les mouvements d'évitement (B1) et les ordres de stationnement sont mis en œuvre selon la priorité la plus élevée et les opérations de service (MS1, MS2) et les commandes de mouvement configurées manuellement sont mises en œuvre selon une priorité élevée.

2. Procédé selon la revendication 1, **caractérisé en ce que** la commande de service pour l'insertion d'un bobinot vide (MS1) est mise en œuvre selon une priorité élevée.

3. Procédé selon la revendication 1 ou 2, **caractérisé en ce que** la commande de service pour l'enfilage d'un fil sur un bobinot vide (MS2) est mise en œuvre selon une priorité élevée.

4. Procédé selon une ou plusieurs revendications précédentes, **caractérisé en ce que** la commande de service pour l'exécution d'une course de dépoussiérage (S3) est mise en œuvre selon une priorité moyenne.

5. Procédé selon une ou plusieurs revendications précédentes, **caractérisé en ce que** les commandes de service (S1, S2) générées de manière automatisée par les postes de travail sont mises en œuvre selon une priorité normale.

6. Groupe de services avec un dispositif de commande pour la mise en œuvre des commandes de mouvement et des commandes de service sur les postes de travail d'une machine textile,
**caractérisé en ce que**
le dispositif de commande donne la priorité aux opérations de service (S1, S2, S3) et aux commandes de mouvement (B1) à exécuter par le groupe de service, de sorte que les mouvements d'évitement (B1) et les ordres de stationnement soient exécutés selon la plus haute priorité et les opérations de services (MS1, MS2) et les commandes de mouvement configurées manuellement soient exécutées selon une priorité élevée.

7. Groupe de service selon la revendication 6, **caractérisé en ce que** le dispositif de commande de la commande de service manuelle pour l'insertion d'un bobinot vide (MS1) et/ou l'enfilage d'un fil sur le bobinot vide (MS2) établisse un ordre de priorité de manière à les exécuter selon une priorité élevée.

8. Groupe de service selon la revendication 6 ou 7, **caractérisé en ce que** le dispositif de commande de la commande de service pour l'exécution d'une course de dépoussiérage (S3) établisse un ordre de priorité de manière à l'exécuter selon une priorité moyenne.

9. Groupe de service selon une ou plusieurs revendications précédentes, **caractérisé en ce que** la commande de services donne la priorité aux commandes de service (S1, S2) générées de manière automatisée par les postes de travail de manière à les exécuter selon une priorité normale.
